# EUROPÄISCHE PATENTSCHRIFT

(11) **EP 2 929 780 B1**
(45) Veröffentlichungstag und Bekanntmachung des Hinweises auf die Patenterteilung: **01.03.2017**
(21) Anmeldenummer: 14164092.0
(22) Anmeldetag: 09.04.2014
(51) Int. Cl.: A01K 1/00, A01K 1/02, A01K 31/19, E04H 15/12, E04H 15/22, E04H 15/20

(54) **Wärmekammer**
Heat chamber
Chambre de traitement thermique

(43) Veröffentlichungstag der Anmeldung: 14.10.2015
(73) Patentinhaber: AGROTEL GmbH, 94152 Neuhaus/Inn (DE)
(72) Erfinder: Laner, Cyriak, 94152 Neuhaus am Inn (DE)
(74) Vertreter: Benninger, Johannes

(56) Entgegenhaltungen:
- EP-A1- 1 387 024
- DE-A1-102005 000 958
- DE-U1- 20 113 155
- GB-A- 777 524
- GB-A- 1 157 113
- GB-A- 2 178 772
- US-A- 2 909 152
- US-A- 5 022 493
- US-A- 5 140 947

## Beschreibung

Die vorliegende Erfindung betrifft eine Wärmekammer gemäß den Merkmalen des Oberbegriffes des Anspruches 1.

Die Erfindung betrifft eine Wärmekammer für Jungtiere, beispielsweise Kälber, Zicklein, Lämmer etc., insbesondere eine Wärmekammer für Jungtiere von Wiederkäuern, zum Aufenthalt unmittelbar nach deren Geburt.

In landwirtschaftlichen Betrieben gibt es aufgrund des in den Stallungen herrschenden Keimdrucks die Bestrebungen, Jungtiere unmittelbar nach der Geburt vom Muttertier zu trennen und separat zu halten. In den ersten Stunden, insbesondere in den ersten 24 Stunden nach der Geburt, ist die Feuchtigkeit, die durch den Geburtsvorgang auftritt, besonders problematisch. Die Feuchtigkeit führt dazu, dass das Jungtier stark auskühlt bis hin zur Unterkühlung, wodurch sich die Jungtiere nachweislich schlechter entwickeln. Diese Problematik ist insbesondere in so genannten Kaltstallungen gegeben.

Die Tendenz Kaltstallungen zur Tierhaltung zu verwenden nimmt jedoch zu, da diese bei der Aufzucht und Haltung der Tiere nachweislich bessere Ergebnisse zeigen. Problematisch ist hierbei jedoch die Temperatur für Jungtiere direkt nach der Geburt. In den ersten Stunden nach der Geburt ist neben einem ausreichenden Warmhalten auch die Trocknung der Jungtiere wichtig. Dies erfolgt in der Regel in dafür ausgebildeten speziellen Wärmeräumen bzw. Wärmekammern, die beispielsweise als Extra- Räume neben den Kaltstallungen ausgebildet sind. Nachdem die Jungtiere den speziellen Wärmeraum verlassen haben, muss dieser gereinigt werden, insbesondere um ein mögliches Übertragen von Krankheitskeimen zu verhindern.

Heute am Markt befindliche Lösungen von solchen hierfür geeigneten Wärmekammern weisen einen kompakten Aufbau auf, der im Falle der Nichtnutzung viel Platz verbraucht. Je nachdem, für welche Jungtiere die Wärmekammer genutzt werden soll, insbesondere je nachdem wie viele Jungtiere zu einem bestimmten Zeitraum auf die Welt kommen, werden zu einem bestimmten Zeitpunkt gegebenenfalls mehrere Wärmekammern benötigt, während für die meiste Zeit des Jahres kein Bedarf an solchen Wärmekammern besteht. Da die Zeit der Nichtnutzung meist wesentlich länger ist, als die Zeit der Nutzung und oftmals zwei oder mehr Wärmekammern zeitgleich benötigt werden, entsteht je nach Größe der Stallanlage ein nicht zu vernachlässigender Platzbedarf für die Wärmekammern.

Das Dokument EP 1387024 A1 beschreibt eine pneumatisch gehaltene Gebäudestruktur mit undurchlässigen Seitenwänden, die eine Belüftung erlauben. Diese ist vor allem für Notsituationen geeignet, in denen schnell überdachte Strukturen bereitgestellt werden müssen. Die Wände und das Dach sind als Luftkammern ausgebildet, die mit Luft befüllt werden, damit sie die vorgesehene Struktur ausbilden. Ein Beheizen der Gebäudestruktur kann über einen Heizlüfter realisiert werden.

Das Dokument DE 20113155 U1 beschreibt ein Zwei- oder Mehr Personenzelt mit Luftkammern, insbesondere besteht der gesamte Unterboden des Zeltes aus einer mit Luft befüllbaren Kammer, die mit dem Material des Zeltoberbaus verschweißt ist und mit diesem eine Einheit bildet.

Das Dokument DE 102005000958 A1 beschreibt eine portable Saune, deren Wandung aus einem mindestens teilweise zweiwandigen Zelt besteht. Zusätzlich wird ein Tragwerk mit elastischen oder steifen Zeltstangen beschrieben. Innerhalb der Saune wird eine feuchte Wärme erzeugt.

Das Dokument GB 777524 A beschreibt ein Zelt zum Brüten von Hühnern oder ähnlichem. Dieses weist keinen Boden auf und wird so aufgehängt, dass der zwischen dem Boden und den Seitenwänden ausgebildete Spalt eine gute Belüftung erlaubt. Der Spalt ist jedoch so gering, dass die Vögel nicht hinaus gelangen können.

Das Dokument US 2909152 A offenbart ebenfalls ein schwebendes Zelt zum Brüten von Hühnern. Die Seitenwände sind nicht lösbar miteinander verbunden. Das Zelt weist ebenfalls keinen Bodenbereich auf.

Das Dokument GB 2178772 A beschreibt ein aufblasbares Zelt, insbesondere für medizinische Anwendungen, bestehend aus Kunststoff- Seitenwänden und umfassend ein Gebläse zum Aufblasen des Zeltes. Das Zelt wird insbesondere durch Rahmenelemente 1 gehalten.

Das Dokument US 5140947 A offenbart eine Wärmekammer für neugeborene Kälber in Form einer transportablen Box mit einem oberen Deckel. Innerhalb der Box ist eine Hängematte angeordnet, die das neugeborene Tier in einer aufrechten Position hält, so dass dieses nicht auf dem Boden der Wärmekammer liegt. Die Kammer ist mit Gebläsen beheizbar, um die Tiere schnell zu wärmen und zu trocknen

Gegenüber am Markt befindlichen Lösungen, soll eine kostengünstige und platzsparende Wärmekammer geschaffen werden. Die obige Aufgabe wird durch eine Wärmekammer gelöst, die die Merkmale in dem Patentanspruch 1 umfasst. Weitere vorteilhafte Ausgestaltungen werden durch die Unteransprüche beschrieben.

Die Wärmekammer besteht aus Seitenwänden und einem Dach und optional aus einem Boden. Der Aufbau der Wände und des Dachs wird bevorzugt aus einem Folien- und / oder Gewebematerial ausgeführt. Als Folien- und / oder Gewebematerial kommen hierbei bevorzugt gewebeverstärkte Folien aus den Kunststoffen wie beispielsweise PVC, PE oder PP zum Einsatz. Um eine bessere Isolierwirkung zu erzielen sind auch zweilagige Folienaufbauten mit zwei Gewebefolien und einer Zwischenschicht zur Isolierung möglich. Die Zwischenschicht kann dabei vorzugsweise ein Lufthohlraum, ein Vlies aus Kunststofffasern, wie Polyester und / oder auch ein geschäumter Kunststoff, beispielsweise Polyurethan sein. Neben einer Isolierung ist auch eine statische Versteifung zwischen die beiden Folien einbringbar, insbesondere um die Stabilität der Seitenwände der Wärmekammer zu erhöhen. Die Versteifungselemente können dabei aus Metall, Kunststoff oder Holz bestehen. Die Befestigung kann mit formschlüssiger Verbindung durch das Einhängen in vorgefertigte Befestigungen, aber auch stoffschlüssig durch Verschweißen oder Verkleben erfolgen.

Die Ausführung der Folien ist undurchsichtig, durchscheinend oder auch transparent möglich. Dabei ist insbesondere eine durchscheinende oder transparente Ausführung des Daches möglich.

Der optionale Boden kann für besseren Liegekomfort des Jungtieres aus geschäumten Kunststoffplatten bestehen, oder ebenso einen Folienaufbau aufweisen, wie die Wände, bzw. das Dach. Es ist auch möglich zwei Folien mit einer Luftzwischenschicht zu verwenden. Insbesondere ist zwischen den beiden Folien ein Hohlraum ausgebildet, der mit einem Fluid befüllt werden kann, beispielsweise mit Luft aufgeblasen werden kann. Nach Gebrauch wird das Fluid aus dem Hohlraum entfernt und der Boden kann somit leicht zusammengelegt und verstaut werden. Die Ausführung ist ähnlich einer Luftmatratze.

Ein aus Schaumstoff bestehender und / oder zwischen den Gewebefolien Schaumstoff aufweisender Boden kann auch im Randbereich mit einer Vertiefungsrille ausgestattet sein, in die die Seitenwände gestellt wird und somit die Stabilität der Wärmekammer verbessert wird. Eine Vertiefung kann beispielsweise durch eine Verpressung und Wärmeeinbringung erreicht werden, dass partiell am Umfangsbereich der Schaum verpresst wird und eine Rille bildet.

Die einzelnen Folienelemente können zumindest teilweise fest miteinander verbunden sein. Dies kann durch Kleben oder Schweißen der Folien erfolgen. Zumindest teilweise sind die Folienelemente auch lösbar miteinander verbunden. Die lösbaren Verbindungen können durch einen Reißverschluss, durch Klettverschlüsse, durch Druckknöpfe oder herkömmliche Knöpfe realisiert werden, wobei auch unterschiedliche Verschlusslösungen kombiniert werden können.

Durch den Aufbau aus Folien ist die Kammer bei Nichtverwendung einfach zusammenlegbar und kann dann einfach und platzsparend verstaut und gelagert werden.

Eine Ausführungsvariante besteht aus drei flächigen Teilen. Der erste Teil ist der Dachbereich, welcher mit einem Reißverschluss an der Seitenwand befestigt wird. Die Seitenwand ist eine flächige Bahn, welche durch Einrollen eine Zylindermantelfläche bildet. Diese Bahn wird durch einen Reisverschluss an den Schmalseiten zu einem Zylindermantel verbunden. An den Folien sind im unteren Bereich Planenhaken angebracht, mit denen der Boden, in dem sich eine umlaufende Expanderschnur befindet mit der Seitenwand verbunden werden kann.

Die geometrische Form der Wärmekammer entspricht im Wesentlichen einem Zylinder mit einem Durchmesser von ca. 1,2 und einer Höhe von ca. 1,0m. Dabei kann sowohl der Durchmesser, wie bei anderen geometrischen Formen die Länge, wie auch die Breite und die Höhe variieren und beträgt vorzugsweise jeweils von 0,6 bis max. 2m. Die Form des Zylinders stellt eine bevorzugte Ausführungsform dar, die Erfindung ist jedoch nicht auf diese Geometrie beschränkt. Es sind auch Quader, Pyramiden, Halbkugeln oder Mischformen daraus möglich.

Die Standfestigkeit wird durch die Folien selbst erreicht, indem man eine entsprechende Dicke auswählt, die für ausreichend Stabilität sorgt. Eine weitere Möglichkeit ist in die Seitenwand, bzw. auch in den Deckel Versteifungsmaterialien einzubringen, die zwischen den beiden Planen stabilisiert sind und die Stabilität des Gesamtsystems verbessern. Die eingebaute Versteifung kann dabei aus Metall, Kunststoff oder Holz bestehen. Alternativ kann die Standfestigkeit durch einen leichten Überdruck im Inneren der Wärmekammer erreicht werden, wobei die gesamte Wärmekammer durch den Überdruck aufgeblasen wird. Ebenso kann die Stabilität durch eine Rahmenkonstruktion erfolgen. Dieser Rahmen besteht bevorzugt aus Metallprofilen, welche ineinander gesteckt, aber auch miteinander verschraubt sein können. Zur schnellen Montage und Demontage ist es vorteilhaft, einen Rahmen aus steckbaren Metallprofilen zu konstruieren. Neben Metallprofilen sind auch Kunststoffprofile als Rahmenmaterial für die mechanische Stabilität der Wärmekammer geeignet.

Zur besseren Trocknung des Jungtiers und zum Schutz vor Unterkühlung ist diese zusätzlich mit einer Wärmequelle ausgestattet. Als Wärmequelle kann ein Heizlüfter dienen, der bevorzugt außerhalb der Wärmekammer aufgestellt wird und mit einer Öffnung und einem Luftschlauch mit einer Seitenwand verbunden ist, um warme Luft ins Innere zu transportieren und dadurch die Wärmekammer zu erwärmen. Bevorzugt wird der Schlauch an einer Öffnung, welche im Bereich eines Versteifungselements eingebracht wird, befestigt. Der Schlauch dient dazu, dass der Heizlüfter in einem Abstand zur Wärmekammer aufgestellt werden kann und somit bei einem Umstürzen der Kammer keine Brandgefahr von diesem ausgeht. Neben einem Heizlüfter können auch Wandheizelemente in die Seitenwände und/ oder in den Boden eingebaut sein. Eine weitere Möglichkeit ist die Verwendung von Wärmestrahlern, welche bevorzugt durch Öffnungen in den Wänden oder des Daches eingebaut sein können.

Neben der Wärme ist auch auf ausreichende Frischluftzufuhr zu achten, damit das Jungtier mit ausreichend Sauerstoff versorgt wird. Die Frischluftzufuhr kann kombiniert mit der Wärmezufuhr erfolgen, beispielsweise bei einem Heizlüfter, dessen Zuluft aus Frischluft besteht, oder einer separaten Luftzufuhr mittels Ventilator oder einem geeigneten Überdruckbehälter. Bei Verwendung eines geeigneten Überdruckbehälters kann dieser bevorzugt Sauerstoff, oder zumindest mit Sauerstoff angereicherte Luft enthalten und dadurch den Sauerstoffgehalt in der Wärmkammer erhöhen, was sich positiv auf die Entwicklung des Jungtieres auswirkt. Eine Ausführungsform sieht vor, dass die Zuluft durch eine runde Öffnung mit Schlauchbefestigung erfolgt. Diese Öffnung kann mit einer Klappe oder einem Gitter zur Zuluftregelung ausgerüstet sein.

Neben der Frischluftzufuhr braucht es auch eine geeignete Möglichkeit zum Abtransport der verbrauchten Luft. Die Zufuhr, wie auch die Abfuhr der Luft kann durch in die Folien eingearbeitete Öffnungen erfolgen. Die Öffnungen können sich auch durch nur teilweises Verschließen der Folienelemente zueinander, somit freien Öffnungen an den Verbindungsstellen ergeben. Die Abluft kann durch nur teilweises Verschließen zumindest eines der beiden Reißverschlusslösungen an der Seitenwand, wie auch des Dachs erfolgen. Durch einfaches Öffnen und Schließen des Reißverschlusses wird die Abluftöffnung entsprechend geregelt.

Die Menge der Zuluft und der Abluft kann durch geeignete Vorrichtungen geregelt werden. Diese Vorrichtungen können Gitter oder Klappen sein, welche teilweise geöffnet werden können und somit unterschiedliche Querschnitte freigeben. Die Zuluftmenge kann aber auch durch eine unterschiedliche Luftmenge aus dem Heizlüfter, durch den Ventilator oder einem Überdruckbehälter geregelt werden. Die Regelung kann dabei manuell erfolgen, aber auch angetrieben durch Stellmotore erfolgen. Die Regelung kann dabei insbesondere so ausgeführt sein, dass etwas mehr Zuluft als Abluft eingestellt ist, damit ein Überdruck entsteht und sich die Wärmekammer stabilisiert. Die Regelung kann anhand geeigneter Sensoren zur Ermittlung bestimmter Messgrößen, wie der Temperatur und / oder der Luftfeuchtigkeit und / oder des Sauerstoffgehaltes im Inneren der Wärmekammer erfolgen. Damit kann einerseits die Heizleistung der Wärmequelle eingestellt werden, andererseits die Zuluft und / oder Abluft eingestellt werden. Zur Luftmessung ist es insbesondere auch möglich, den Sauerstoffgehalt in der Kammer zu erfassen und damit die Zuluft entsprechend aufzubereiten.

Durch den Folienaufbau ergibt sich die Möglichkeit die Wärmekammer platzsparend zusammenzufalten und damit Lagerraum einzusparen. Speziell in den Sommermonaten oder auch in Zeiten in denen keine Geburt stattfindet und somit die Wärmekammer nicht benötigt wird, kann diese möglichst platzsparend aufbewahrt werden. Durch die Zusammenlegbarkeit ist die Kammer auch mobil und kann je nach Geburtsort (im Stall, auf der Weide oder auf der Alm) einfach transportiert und aufgestellt werden.

Ein weiterer Punkt ist die einfache Reinigungsmöglichkeit der Wärmekammer nach Gebrauch, bzw. vor einer erneuten Verwendung. Gerade Jungtiere sind gegenüber Bakterien und Keimen sehr empfindlich, dadurch ist es notwendig Materialien zu verwenden, die gut gereinigt und desinfiziert werden können. Dazu eigenen sich glatte Kunststoffoberflächen sehr gut. Die bereits genannten Folien, die zum Aufbau der Wärmekammer verwendet werden, sind sehr gut reinig- und desinfizierbar.

Durch den einfachen Aufbau und die einfache Zerlegbarkeit sind die Einzelteile der Wärmekammer, insbesondere das Dach, die Seitenwand und der Boden, welche jeweils am Boden aufgelegt werden können, gut zu reinigen. Die Reinigung kann dabei mit handelsüblichen Reinigungsmitteln, Bürsten und Hochdruckreinigern gleichermaßen erfolgen.

Ein wichtiger Aspekt der Erfindung ist, dass die erfindungsgemäße Aufbewahrungsbox für ein Jungtier, eine Wärmequelle umfassen kann. Neben der Wärmequelle ist auch eine ausreichende Frischluftzufuhr, insbesondere Sauerstoffzufuhr vorteilhaft für die Entwicklung des Jungtiers. Weiterhin ist die Wärmekammer gut reinig- und desinfizierbar. Dies ist wichtig, da die Jungtiere in den ersten Stunden nach der Geburt hinsichtlich Keime und Bakterien sehr empfindlich sind. Weiterhin ist es vorteilhaft, dass die Wärmekammer mobil und auch zusammenklapp-, bzw. zusammenlegbar ausgeführt sein kann. Durch die kompakte Aufbewahrungsmöglichkeit in der Zeit, in der die Wärmekammer nicht benötigt wird, kann damit Lagerplatz gespart werden.

Somit ist es mit der vorliegenden Erfindung möglich, eine Wärmekammer zum Aufenthalt der Jungtiere unmittelbar nach der Geburt bis zu einigen Stunden, maximal wenigen Tagen zu schaffen, die einerseits die erforderliche Sauberkeit aufweist und andererseits eine entsprechende Temperatur und Frischluft zur Verfügung stellt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer erfindungsgemäßen Wärmekammer.
Figur 2 zeigt ein Detail in der schematischen Ansicht einer erfindungsgemäßen Wärmekammer gemäß Figur 1.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

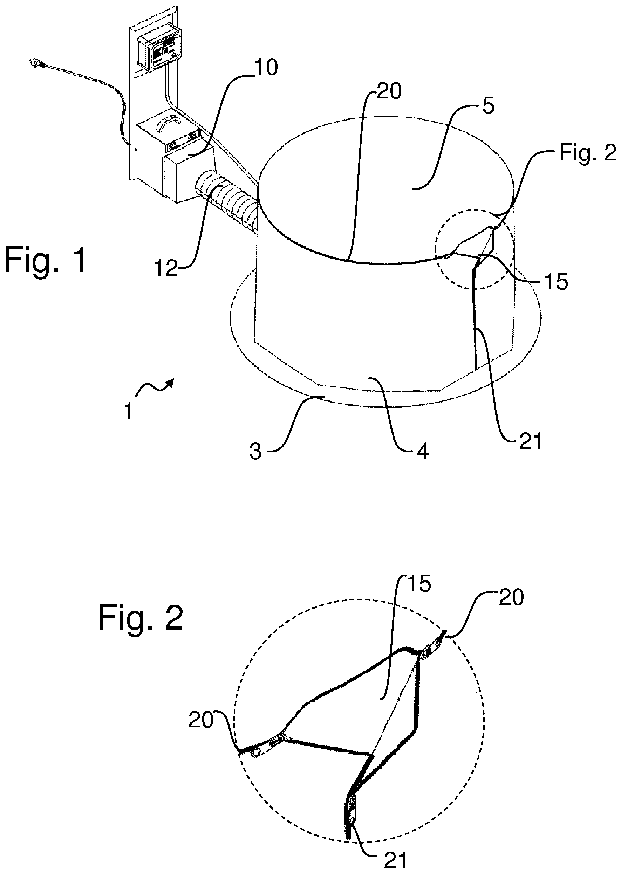

Figur 1 zeigt eine schematische Ansicht einer erfindungsgemäßen Wärmekammer 1 und Figur 2 zeigt ein Detail. Die Wärmekammer 1 umfasst einen Bodenbereich 3, einen zylindrisch ausgebildeten Seitenwandbereich 4 und einen Deckenbereich 5. Diese sind vorzugsweise aus Folien aufgebaut, wobei zumindest der Seitenwandbereich 4 und der Deckenbereich 5 vorzugsweise aus zwei Lagen Folie aufgebaut wind, wobei zwischen die zwei Folienlagen Luft eingeblasen werden kann, um eine Isolierschicht zu bilden. Weiterhin kann insbesondere die Folie des Seitenwandbereichs 4 Verstärkungsstreben aufweisen, die die Stabilität des Seitenwandbereichs 4 erhöhen. Der Bodenbereich 3 besteht vorzugsweise ebenfalls aus zwei Lagen Folie, zwischen denen eine Schaumstofflage angeordnet ist. Im Randbereich des Bodenbereichs 3 ist eine Vertiefungsrille ausgebildet, in die die Unterkante des Seitenwandbereichs 5 eingestellt wird.

Außerhalb der Wärmekammer 1 ist ein Heizlüfter 10 angeordnet, der über einen Verbindungsschlauch 12 mit dem Seitenwandbereich 4 verbunden ist, so dass Warmluft und / oder Frischluft in den Innenraum der Wärmekammerl geblasen werden kann.

Die Abluft aus dem Innenraum der Wärmekammer 1 kann insbesondere über eine Öffnung 15 entweichen, die zwischen dem Deckenbereich 5 und dem Seitenwandbereich 4 ausgebildet ist. Insbesondere sind der Deckenbereich 5 und der Seitenwandbereich 4 über Reißverschlusselemente 20, 21 miteinander verbunden. Durch ein nur teilweises Verschließen der Folienelemente von Deckenbereich 5 und Seitenwandbereich 4 miteinander, kann die Größe der Öffnung 15 beliebig eingestellt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Wärmekammer
- 3: Bodenbereich
- 4: Seitenwandbereich
- 5: Deckenbereich

- 10: Heizlüfter
- 12: Verbindungsschlauch
- 15: Öffnung
- 20: Reißverschlusselement
- 21: Reißverschlusselement

## Patentansprüche

1. Wärmekammer (1) zur Wärmung und Trocknung von frisch geborenen Jungtieren, wie Kälbern, Ziegen oder Schafen, **dadurch gekennzeichnet, dass** die Wärmekammer (1) einen Bodenbereich (3), einen Seitenwandbereich (4) und einen Deckenbereich (5) umfasst,
wobei zumindest der Seitenwandbereich (4) und der Deckenbereich (5) der Wärmekammer (1) aus einem Folien- und / oder Gewebematerial aufgebaut sind; wobei der Bodenbereich (3) der Wärmekammer (1) eine umlaufende Vertiefung zur Aufnahme des Seitenwandbereichs (4) aufweist.

2. Wärmekammer (1) nach Anspruch 1, **dadurch gekennzeichnet, dass** das Folien- und / oder Gewebematerial PVC, PE oder PP und / oder ein verstärkendes Gewebe umfasst/umfassen und / oder dass das Folien- und / oder Gewebematerial zumindest teilweise zweilagig mit einer Mittelschicht aus Luft, Vlies und / oder Schaumstoff aufgebaut ist/sind.

3. Wärmekammer (1) nach Anspruch 2, **dadurch gekennzeichnet, dass** die Wärmekammer (1) zur besseren Stabilität in dem Seitenwandbereich (4) zwischen den Folien Versteifungselemente aufweist.

4. Wärmekammer (1) nach mindestens einem der Ansprüche 1 bis 3, **dadurch gekennzeichnet, dass** ein Innenraum der Wärmekammer (1) zur Verbesserung der Stabilität der Wärmekammer (1) mit einem Überdruck beaufschlagbar ist.

5. Wärmekammer (1) nach mindestens einem der Ansprüche 1 bis 4, **dadurch gekennzeichnet, dass** der Bodenbereich (3) aus einem zweilagigen Folien- und / oder Gewebematerial aufgebaut ist und wobei zwischen den zwei Lagen ein mit einem Fluid befüllbarer Hohlraum angeordnet ist.

6. Wärmekammer (1) nach einem der voranstehenden Ansprüche, **dadurch gekennzeichnet, dass** die einzelnen den Innenraum der Wärmekammer (1) begrenzenden Teile, insbesondere der Bodenbereich (3), der Seitenwandbereich (4) und / oder der Dachbereich (5), zumindest teilweise über lösbare Verbindungen (20, 21) miteinander verbunden sind und / oder dass den Innenraum der Wärmekammer (1) begrenzenden Teile, insbesondere der Bodenbereich (3), der Seitenwandbereich (4) und / oder der Dachbereich (5), zumindest teilweise zusammenrollbar sind.

7. Wärmekammer (1) nach mindestens einem der voranstehenden Ansprüche, **dadurch gekennzeichnet, dass** zumindest eine Zuluft- und / oder eine Abluftöffnung (15) vorgesehen ist, und / oder dass als Zuluft zumindest eine mit Sauerstoff angereicherte Luft in die Wärmekammer (1) zuführbar ist.

8. Wärmekammer (1) nach Anspruch 7, **dadurch gekennzeichnet, dass** die Wärmekammer mit einer Wärmequelle (10) ausgestattet ist und dass die Heizleistung der Wärmequelle (10) regelbar ist und / oder dass die Zuluft- und / oder die Abluftmenge regelbar ist, wobei die Wärmekammer (1) ein Gitter oder eine Klappe aufweist, wobei der Querschnitt des Gitters oder der Klappe einstellbar und somit die Abluftmenge regulierbar ist.

9. Wärmekammer (1) nach mindestens einem der Ansprüche 7 bis 8, **dadurch gekennzeichnet, dass** zur Regelung einer Temperatur innerhalb der Wärmekammer (1) und / oder zur Regelung der Zuluft- und / oder Abluftmenge zumindest ein Sensor zur Messung einer Temperatur innerhalb der Wärmekammer (1), ein Sensor zur Messung einer Feuchtigkeit innerhalb der Wärmekammer (1) und / oder ein Sensor zur Messung eines Sauerstoffgehalts innerhalb der Wärmekammer (1) angeordnet ist.

10. Wärmekammer (1) nach einem der voranstehenden Ansprüche, wobei die Wärmekammer (1) aus drei flächigen Teilen besteht, wobei ein erster flächiger Teil den Deckenbereich (5) bildet und wobei der Seitenwandbereich (4) durch eine flächige Bahn gebildet ist, deren Schmalseiten über einen Reisverschluss unter Ausbildung eines Zylindermantels verbindbar sind, wobei an der Folie des Seitenwandbereich (4) Planenhaken angeordnet sind und wobei der Bodenbereich (3) eine umlaufende_Expanderschnur zur Verbindung von Seitenwandbereich (4) und Bodenbereich (3) umfasst.

11. Wärmekammer (1) nach einem der Ansprüche 7 bis 10, wobei Wandheizelemente in dem Seitenwandbereich (4) und / oder in den Bodenbereich integriert sind.

12. Wärmekammer (1) nach einem der voranstehenden Ansprüche, wobei der Wärmekammer (1) ein Überdruckbehälter mit Sauerstoff zugeordnet ist, insbesondere zur Anreicherung der Luft in der Wärmekammer mit Sauerstoff.

13. Wärmekammer (1) nach einem der Ansprüche 7 bis 12, wobei die Wärmekammer (1) Vorrichtungen zur Regulierung der Zuluft und / oder Abluft umfasst und / oder wobei die Wärmekammer (1) Sensoren zur Ermittlung bestimmter Messgrößen umfasst, die mit den Vorrichtungen zur Regulierung der Zuluft und / oder Abluft gekoppelt sind.

## Claims

1. A warming chamber (1) for warming and drying new-born young animals, such as calves, goats or sheep, **characterised in that**
the warming chamber (1) comprises a bottom area (3), a sidewall area (4) and a ceiling area (5),
wherein at least the sidewall area (4) and the ceiling area (5) of the warming chamber (1) are constructed of a foil material and/or fabric material;
wherein the bottom area (3) of the warming chamber (1) has a circumferential slot for accommodating the sidewall area (4).

2. The warming chamber (1) as recited in claim 1, **characterised in that** the foil material and/or fabric material comprises/comprise PVC, PE or PP and/or a reinforcing fabric, and/or **in that** the foil material and/or fabric material is/are at least partly constructed in two layers with a centre layer of air, fleece and/or foam material.

3. The warming chamber (1) as recited in claim 2, **characterised in that** the warming chamber (1) has stiffening elements in the sidewall area (4) between the foils for better stability.

4. The warming chamber (1) as recited in at least one of the claims 1 to 3, **characterised in that** an interior space of the warming chamber (1) is impingeable with an overpressure for improving the stability of the warming chamber (1).

5. The warming chamber (1) as recited in at least one of the claims 1 to 4, **characterised in that** the bottom area (3) is constructed of a two-layer foil material and/or fabric material, and wherein a hollow space that is fillable with a fluid is arranged between the two layers.

6. The warming chamber (1) as recited in one of the previous claims, **characterised in that** the individual parts delimiting the interior space of the warming chamber (1), in particular the bottom area (3), the sidewall area (4) and/or the ceiling area (5), are at least partly connected to each other by way of detachable connections (20, 21), and/or **in that** the parts delimiting the interior space of the warming chamber (1), in particular the bottom area (3), the sidewall area (4) and/or the ceiling area (5), can be at least partly rolled up.

7. The warming chamber (1) as recited in at least one of the previous claims, **characterised in that** at least one supply air opening and/or exhaust air opening (15) is provided, and/or **in that** at least an air that is enriched with oxygen is suppliable into the warming chamber (1) as supply air.

8. The warming chamber (1) as recited in claim 7, **characterised in that** the warming chamber is equipped with a heat source (10), and **in that** the heat output of the heat source (10) is regulatable, and/or **in that** the amount of supply air and/or of exhaust air is regulatable, wherein the warming chamber (1) has a grid or a flap, wherein the cross section of the grid or of the flap is adjustable and the amount of exhaust air is thus regulatable.

9. The warming chamber (1) as recited in at least one of the claims 7 to 8, **characterised in that**, for the purpose of regulating a temperature within the warming chamber (1) and/or for the purpose of regulating the amount of supply air and/or of exhaust air, at least one sensor is arranged within the warming chamber (1) for measuring a temperature, one sensor is arranged within the warming chamber (1) for measuring a moisture and/or one sensor is arranged within the warming chamber (1) for measuring an oxygen content.

10. The warming chamber (1) as recited in one of the previous claims wherein the warming chamber (1) consists of three planar parts, wherein a first planar part forms the ceiling area (5), and wherein the sidewall area (4) is formed by a planar panel, of which the narrow sides are connectable by way of a zip fastener, thereby forming a cylinder barrel, and wherein cover hooks are arranged at the foil of the sidewall area (4), and wherein the bottom area (3) comprises a circumferential expander cord for the connection of the sidewall area (4) and the bottom area (3).

11. The warming chamber (1) as recited in one of the claims 7 to 10 wherein wall-heating elements are integrated into the sidewall area (4) and/or into the bottom area.

12. The warming chamber (1) as recited in one of the previous claims wherein the warming chamber (1) is associated with an overpressure container with oxygen, in particular for enriching the air in the warming chamber with oxygen.

13. The warming chamber (1) as recited in one of the claims 7 to 12 wherein the warming chamber (1) comprises devices for regulating the supply air and/or the exhaust air, and/or wherein the warming chamber (1) comprises sensors for determining certain measurands, which sensors are coupled with the devices for regulating the supply air and/or the exhaust air.

## Revendications

1. Chambre à chaleur (1) destinée à chauffer et à sécher de jeunes animaux nouveau-nés, tels que les veaux, les chèvres ou les moutons, **caractérisée par le fait que** la chambre à chaleur (1) comprend une zone de sol (3), une zone de paroi latérale (4) et une zone de plafond (5), dans laquelle au moins ladite zone de paroi latérale (4) et ladite zone de plafond (5) de la chambre à chaleur (1) sont réalisées à partir d'un matériau en feuille et / ou en tissu, dans laquelle la zone de sol (3) de la chambre à chaleur (1) présente un creux périphérique destiné à recevoir la zone de paroi de latérale (4).

2. Chambre à chaleur (1) selon la revendication 1, **caractérisée par le fait que** le matériau en feuille et / ou en tissu comprend/comprennent le PVC, le PE ou le PP et / ou un tissu renforçant et / ou que le matériau en feuille et / ou en tissu est/sont réalisé(s), au moins en partie, à deux couches avec une couche centrale en air, en non-tissé et / ou en mousse.

3. Chambre à chaleur (1) selon la revendication 2, **caractérisée par le fait que**, pour une meilleure stabilité dans la zone de paroi latérale (4), la chambre à chaleur (1) présente des éléments de rigidification entre les feuilles.

4. Chambre à chaleur (1) selon l'une au moins des revendications 1 à 3, **caractérisée par le fait que**, pour améliorer la stabilité de la chambre à chaleur (1), un intérieur de la chambre à chaleur (1) peut être mis en une surpression.

5. Chambre à chaleur (1) selon l'une au moins des revendications 1 à 4, **caractérisée par le fait que** la zone de sol (3) est réalisée à partir d'un matériau en feuille et / ou en tissu à deux couches, et dans laquelle une cavité apte à être remplie d'un fluide est disposée entre les deux couches.

6. Chambre à chaleur (1) selon l'une quelconque des revendications précédentes, **caractérisée par le fait que** les parties individuelles délimitant l'intérieur de la chambre à chaleur (1), en particulier la zone de sol (3), la zone de paroi latérale (4) et / ou la zone de toit (5), sont reliées les unes aux autres au moins en partie par des liaisons amovibles (20, 21), et / ou que des parties délimitant l'intérieur de la chambre à chaleur (1), en particulier la zone de sol (3), la zone de paroi latérale (4) et / ou la zone de toit (5), peuvent être enroulées au moins en partie.

7. Chambre à chaleur (1) selon l'une au moins des revendications précédentes, **caractérisée par le fait qu'**au moins un orifice d'amenée d'air et / ou un orifice de sortie d'air (15) est prévu, et / ou que, en tant qu'air amené, au moins un air enrichi en oxygène peut être amené à la chambre à chaleur (1).

8. Chambre à chaleur (1) selon la revendication 7, **caractérisée par le fait que** la chambre à chaleur est équipée d'une source de chaleur (10) et que la puissance thermique de la source de chaleur (10) est réglable et / ou que la quantité d'air amené et / ou la quantité d'air évacué est réglable, dans laquelle la chambre à chaleur (1) présente une grille ou un volet, la section transversale de la grille ou du volet étant réglable et, ainsi, la quantité d'air évacué pouvant être régulée.

9. Chambre à chaleur (1) selon l'une au moins des revendications 7 à 8, **caractérisée par le fait que**, pour la régulation d'une température à l'intérieur de la chambre à chaleur (1) et / ou pour la régulation de la quantité d'air amené et / ou d'air évacué, au moins un capteur destiné à mesurer une température à l'intérieur de la chambre à chaleur (1), un capteur destiné à mesurer une humidité à l'intérieur de la chambre à chaleur (1) et / ou un capteur destiné à mesurer une teneur en oxygène à l'intérieur de la chambre à chaleur (1) est disposé.

10. Chambre à chaleur (1) selon l'une quelconque des revendications précédentes, dans laquelle la chambre à chaleur (1) se compose de trois parties en nappe, une première partie en nappe formant la zone de plafond (5), et la zone de paroi latérale (4) étant formée par une bande en nappe dont les petits côtés peuvent être reliés entre eux par une fermeture à glissière en formant une surface latérale cylindrique, des crochets de bâche étant disposés sur la feuille de la zone de paroi latérale (4), et la zone de sol (3) comprenant un cordon extenseur périphérique destiné à relier la zone de paroi latérale (4) et la zone de sol (3).

11. Chambre à chaleur (1) selon l'une quelconque des revendications 7 à 10, dans laquelle des éléments de chauffage muraux sont intégrés à la zone de paroi latérale (4) et / ou à la zone de sol.

12. Chambre à chaleur (1) selon l'une quelconque des revendications précédentes, dans laquelle un récipient à surpression contenant de l'oxygène est associé à la chambre à chaleur (1), en particulier pour enrichir en oxygène l'air à l'intérieur de la chambre à chaleur.

13. Chambre à chaleur (1) selon l'une quelconque des revendications 7 à 12, dans laquelle la chambre à chaleur (1) comprend des dispositifs de régulation de l'air amené et / ou de l'air évacué, et / ou dans laquelle la chambre à chaleur (1) comprend des capteurs destinés à déterminer des grandeurs de mesure déterminées qui sont couplés aux dispositifs de régulation de l'air amené et / ou de l'air évacué.
